Europäisches Patentamt

European Patent Office

Office européen des brevets

(11) Publication number: 0 478 782 A1

# EUROPEAN PATENT APPLICATION
## published in accordance with Art. 158(3) EPC

(21) Application number: 91904795.1

(22) Date of filing: 01.03.91

(86) International application number: PCT/JP91/00279

(87) International publication number: WO 91/14533 (03.10.91 91/23)

(51) Int. Cl.5: B23P 19/06

(30) Priority: 26.03.90 JP 78272/90
14.04.90 JP 97838/90
06.10.90 JP 269087/90
06.10.90 JP 269088/90

(43) Date of publication of application:
08.04.92 Bulletin 92/15

(84) Designated Contracting States:
DE GB IT SE

(71) Applicant: Aoyama, Yoshitaka
20-11, Makitsukadai 2-cho
Sakai-shi, Osaka 590-01(JP)

(72) Inventor: Aoyama, Yoshitaka
20-11, Makitsukadai 2-cho
Sakai-shi, Osaka 590-01(JP)

(74) Representative: Tillbrook, Christopher John
Chris J Tillbrook & Co 5 Old Rectory Close
Churchover
Rugby, Warwickshire CV23 0EN(GB)

(54) PART SUPPLYING ROD.

(57) A part supplying rod for attracting, holding a part (3) such as a bolt at the forward end thereof by a magnetic force and carrying and supplying it to a given position, wherein the polarities (N, S) are set such that the magnetic lines of force (11) are in a direction perpendicular to the axis of the part, so that substantially no magnetic force is produced at the forward end (1) of the part positioned farther from the end face of the suppling rod. The forward end (1) of the part is prevented from being attracted by a portion not intended, such as an outer surface around a hole of a mating member when the part (3) is supplied to the hole of the mating member, thereby achieving a smooth and accurate part supply.

FIG.4

TECHNICAL FIELD

This invention relates to a parts feeding rod adapted to magnetically attract a part to the front end thereof for feeding it to a predetermined place and is applicable particularly to the case where the part itself and the mating member to which the part is fed are made of a magnetic material, such as iron.

BACKGROUND ART

For convenience of description, a prior art example Will first be described with reference to the attached drawings. Fig. 32 is a longitudinal sectional view showing a prior art example of the magnet type, and Fig. 33 is a longitudinal sectional view showing a prior art example of the electromagnetic type.

A feed rod 4 having a magnet 6 at its front end for attracting parts, as shown in Fig. 32, is known. The part handled therein is a bolt 3 made of iron, having a stem portion 1 and a head portion 2, and it is attractively held on the end surface 5 of the feed rod 4 by the magnetic force of a magnet element (permanent magnet) 6. The feed rod 4 comprises a hollow shaft 7, and an inner shaft 8 inserted therein for advance and retraction movements. The magnet element 6 is embedded in the end of the inner shaft 8 with such an orientation that either the N-pole surface or the S-pole surface forms part of the end surface 5. The hollow shaft 7 and inner shaft 8 of the feed rod 4 are made of a nonmagnetic material, such as stainless steel. In order to feed a bolt 3 into a hole 10 in an iron plate 9, which is a ferromagnetic body, the feed rod 4 advances obliquely downward toward the hole 10 with its end surface 5 holding the bolt 3 by the head portion 2. When the front end of the stem portion 1 comes close to the hole 10, the advance movement of the feed rod 4 is stopped and then the inner shaft 8 alone is forcibly retracted. As a result, the magnet element 6 is separated from the head portion 2 of the bolt 3 with the head portion 2 caught by the end of the hollow shaft 7, so that the attractive magnetic force on the head portion 2 disappears and the bolt 3 fits in the hole 10 as if it falls.

A parts feeding rod 50 of the electromagnetic type having a magnetic body disposed at its front end for attracting parts, as shown in Fig. 33, is also known. The feed rod 50 itself is formed of a magnetic body and it extends through an exciting coil 55 and is connected to the piston rod 66 of an air cylinder 64. The bolt 3 is attracted and held at its head portion 2 on the front end of the feed rod 50 magnetized by the exciting coil 55. In order to feed the bolt 3 into the hole 10 of an iron plate 9 which is a ferromagnetic body, the feed rod 50, magnetized by the exciting coil 55, is advanced obliquely downward by the action of the air cylinder 64. When the front end of the stem portion 1 comes close to the hole 10, the feed rod 50 is stopped and then the passage of electric current to the exciting coil 55 is stopped. In this case, a reverse electric current is applied in order to remove the residual magnetism. As a result, the attractive hold on the bolt 3 is cancelled, so that the bolt 3 fits in the hole 10 as if it falls with the front end of the step portion first.

With the prior art example described above, since the bolt 3 is made of iron, magnetic lines of force 11 (Fig. 33) pass, in high density, through the bolt 3, so that the front end of the stem portion 1 also has strong magnetism. For this reason, when the front end of the stem portion 1 advances close to the iron plate 9, there occurs a phenomenon in which the front end of the stem portion 1 is attracted away toward the iron plate 9, as shown in phantom lines in Figs. 32 and 33, forming a clearance between the head portion 2 of the bolt 3 and the end surface 5 of the feed rod 2 or slightly swinging the whole of the feed 4, 50 to bring the front end of the stem portion 1 into contact with the surface around the hole 10. When the attractive magnetic force on the bolt 3 is removed in this state, the bolt 3 falls in any direction from the state shown in phantom lines, making it impossible to insert the bolt 3 into the hole 10. Alternatively, even if the demagnetization is effected just when the front end of the stem portion 1 slightly enters the hole 10, the groove of the thread in the stem portion 1 is caught by the edge of the hole 10 before the demagnetization; thus, the bolt 3 will tilt and stop in such arrested state. After all, insertion into the hole 10 becomes impossible, as before.

DISCLOSURE OF THE INVENTION

This invention eliminates the problem described above and includes a magnet type in which a magnet for attracting parts is installed in the front end of the feed rod, and an electromagnetic type in which a part is attracted to the front end of the feed rod by a magnetic force produced by an excitation coil.

One form of the invention, in the magnet type, is arranged so that a part is opposed to the outer surface of the magnet element other than its N- and S-pole surfaces. The magnetic lines of force extending from the N-pole to the S-pole pass concentratedly through the region of the part adjacent the outer surface of the magnet, so that there is almost no magnetic line of force passing through the front end of the part and its vicinity and hence no attractive magnetic force is produced in such region.

Another form of the invention, in the magnet type, is arranged so that both N- and S-poles of the magnet element are disposed axially of the feed rod and a yoke of magnetic material is attached to the feed rod with a space defined between it and the magnet axially of the feed rod. The magnetic lines of force from the N-pole to the S-pole are distributed in high density in the yoke and pass concentratedly through the front end and its vicinity, so that there is almost no magnetic line of force passing through the front end and its vicinity and hence there is no attractive magnetic force produced in such region.

Another form of the invention, in the electromagnetic type, is arranged so that a magnetic body of N-pole and a magnetic body of S-pole are disposed on the front end of the feed rod. The magnetic lines of force extending from the magnetic body of N-pole to the magnetic body of S-pole pass concentratedly through the end of a part, e.g., through the head 2, so that there is almost no magnetic line passing through the front end of the part and its vicinity and hence there is no attractive magnetic force produced in such region.

Another form of the invention, in the electromagnetic type, is arranged so that an iron core to be excited by an exciting coil is disposed on the front end of the feed rod with its outer surface other than its N- and S-pole surfaces opposed to a part. The magnetic lines of force from the N-pole to the S-pole pass concentratedly through the portion of the part adjacent the outer surface of the iron core, so that there is no magnetic line of force in the front end of the part and its vicinity and no magnetic force is produced in such region.

These and other features of the invention will become more apparent from the following description given with reference to the attached drawings.

BRIEF DESCRIPTION OF THE DRAWINGS

Fig. 1 is an elevational sectional view showing an embodiment of the magnet type;
Figs. 2 and 3 are perspective views of magnet elements;
Fig. 4 is a diagrammatic view for explaining the principle of the embodiment of Fig.1;
Fig. 5 is a fragmentary view, partly in section, showing a modified example of the feed rod of Fig. 1
Fig. 6 is an elevational sectional view similar to Fig. 1, showing another embodiment of the magnet type;
Fig. 7 is a diagrammatic view for explaining the principle of the embodiment of Figs. 7 and 8;
Fig. 8 is a sectional view taken along the line A-A in Fig. 7;

Figs. 9 and 10 are perspective views of magnet elements;
Fig. 11 is a fragmentary view, partly in section, showing a modified example of the feed rod of Fig. 6;
Fig. 12 is a perspective view showing a unit of yoke and magnet;
Fig. 13 is an elevational sectional view of a parts feeding apparatus;
Fig. 14 is a sectional view taken along the line B-B in Fig. 13;
Fig. 15 is an end perspective view of a feed rod;
Fig. 16 is a fragmentary view, partly in section, showing a modified example of a feed rod;
Fig. 17 is a sectional view showing an application to the feeding of nuts;
Fig. 18 is a sectional view showing an application to a box wrench;
Fig. 19 is an elevational sectional view showing a feed rod of the pull-in type;
Fig. 20 is an elevational sectional view showing an embodiment of the electromagnetic type;
Fig. 21 is a sectional view taken along the line C-C in Fig. 20;
Fig. 22 is a fragmentary enlarged view of the feed rod of Fig. 20;
Fig. 23 is an elevational view showing a modified example of the feed rod of Fig. 20;
Fig. 24 is an elevational view showing a modified example of the feed rod of Fig. 23;
Fig. 25 is a sectional view taken along the line C-C in Fig. 24;
Fig. 26 is a sectional view showing a modified example of the feed rod of Fig. 20;
Fig. 27 is a sectional view taken along the line E-E in Fig. 26;
Fig. 28 is a sectional view similar to Fig. 27, showing a modified example;
Fig. 29 is an elevational view showing another modified example of the electromagnetic type;
Fig. 30 is a fragmentary enlarged sectional view of the feed rod of Fig. 29;
Fig. 31 is a view taken in the direction of arrow F of Fig. 30;
Fig. 32 is an elevational view showing a prior art example of the magnet type; and
Fig. 33 is an elevational view showing a prior art example of the electromagnetic type.

BEST MODE FOR EMBODYING THE INVENTION

In the following description, the parts or portions performing substantially the same functions as in the prior art examples shown in Figs. 32 and 33 are marked with the same reference numerals, with a detailed description thereof omitted.

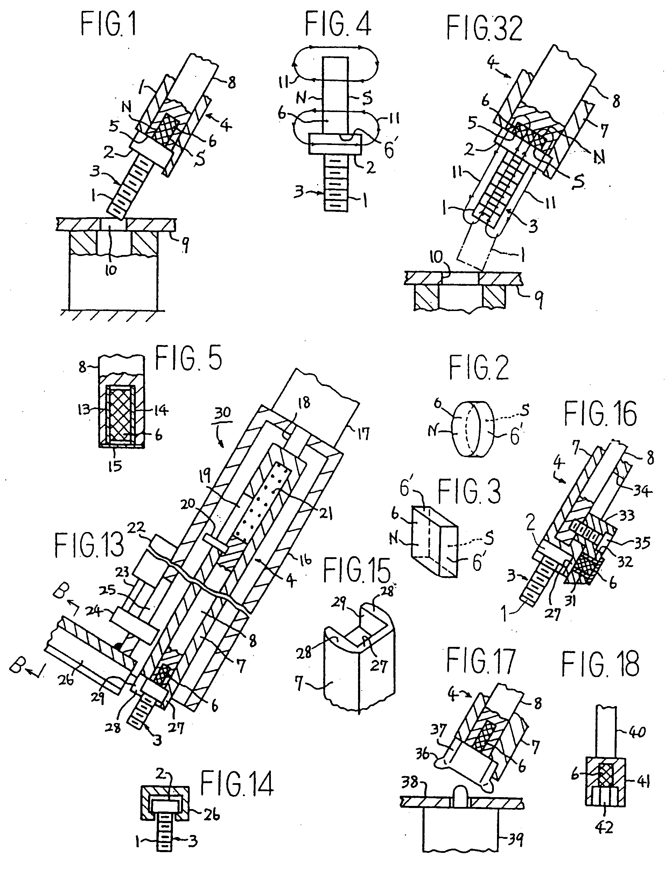

First, a parts feeding rod 4 of the magnet type shown in Fig. 1 is substantially the same as the prior art example described previously except for the orientation of a magnet element 6. The magnet element 6 is oriented so that its outer surface other than its N- and S-pole surfaces is opposed to a part. The magnet element 3 can be made in various forms, such as circular form as shown in Fig. 2 or a polygonal form as shown in Fig. 3. The principle will now be described with reference to Fig. 4. It consists in that a part made of iron, in this case a bolt 3, is attracted at its head portion 2 to the outer surface 6' of the magnet element 6 other than its N- and S-pole surfaces. With the arrangement thus made, as a characteristic property of magnets, the magnetic lines of force 11 pass in high density concentratedly through the head portion 2; that is, they are concentrated on the side nearer to the outer surface 6'. Therefore, in the front end of the stem portion 1, there is no magnetic force produced or even if produced, it is only of the amount that causes no problem. Therefore, the magnet element 6 in Fig. 1 is oriented in the same direction as in Fig. 4.

In a modified example shown in Fig. 5, iron yokes 13 and 14 are intimately contacted with the N- and S-pole surfaces of the magnet element 6, while the front end of the inner shaft 8 is covered with a stainless steel plate 15 which is a nonmagnetic body. With the arrangement thus made, magnetic flux concentration takes place in the yokes, increasing the attractive force, and substantially preventing magnetic force from being produced in the front end of the part.

Thus, in the case where the part itself is made of iron and the recipient member is also made of iron, with attention paid to the relation between the mode of passage of the magnetic lines of force produced in the magnet element and the part, the magnet element is oriented so that the outer surface of the magnet other than its N- and S-pole surfaces is opposed to the part; therefore, since there is no attractive magnetic force in the front end of the part, the part can be transferred very accurately to the mating member; thus, very accurate feeding of parts can be attained.

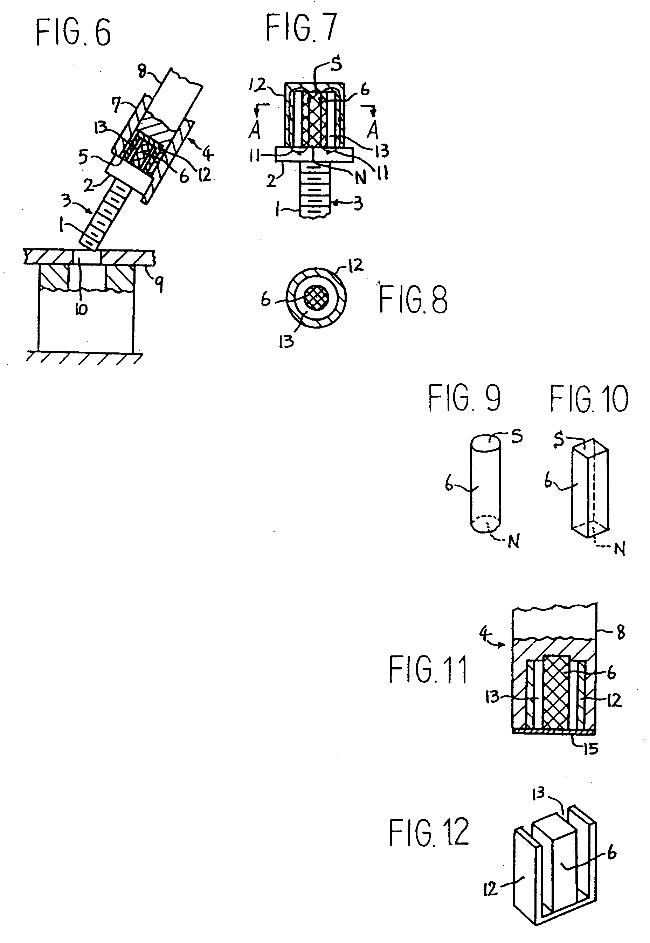

An embodiment shown in Fig. 6 is arranged so that the N- and S-poles of a magnet element 6 are disposed axially of the feed rod 4 and a yoke 12 of magnetic material is attached with a clearance maintained between it and the magnet element 6. The principle will now be described with reference to Figs. 7 and 8. In Fig. 7, the vertical direction is the direction of the axis of the feed rod, and the N- and S-poles of the magnet element are disposed in this axial direction. The yoke 12 in the form of a cup of magnetic material, such as iron, is disposed also in said axial direction and the magnet 6 is installed in the space 13 thereof. With the arrangement thus made, the magnetic lines of force 11 from the magnet element 6 pass in high density concentratedly through the yoke 12, and concerning the bolt 3 attracted as shown it is its head 2 that they pass through, so that either there is no magnetic force produced in the front end of the stem portion 1 or even if it is produced, it is of the amount that causes no problem. When it is desired to assemble such magnet element 6 to the feed rod 4 as shown in Fig. 6, the magnet element 6 and yoke 12 which are utilized as shown in Figs. 7 and 8 are attached to the front end of the feed rod 4, with the magnet element 6 oriented so that its N- and S-poles are disposed axially of the feed rod 4. In addition, the magnet element 6 may be in cylindrical or prismatic form, as shown in Figs. 9 and 10, or any other form.

In a modified example shown in Fig. 11, a yoke 12 is not cup- shaped but hollow cylindrical and is covered with a stainless steel plate 15. Further, in a modified example shown in Fig. 12, a yoke 12 is formed by bending an iron plate into U-shape, and a space 13 is defined between the magnet element 6 and the yoke 12. The space 13 shown in Figs. 6 through 8, 11 and 12 may be filled with a nonmagnetic material, such as resin. In addition, the fixing of the magnet element 6 may be effected by using any suitable means, such as adhesive bonding.

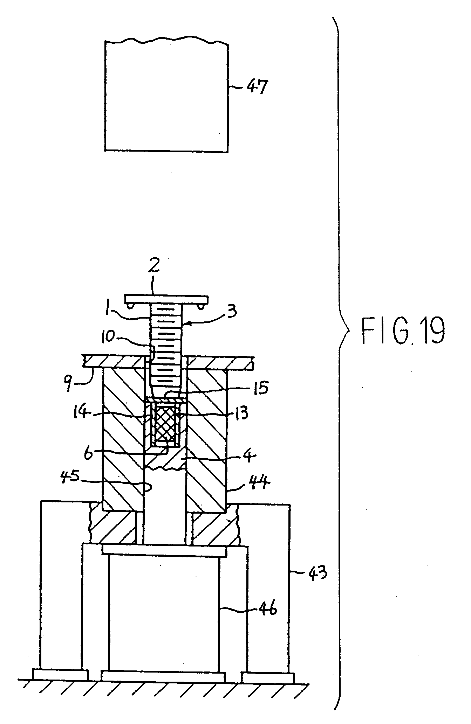

Fig. 13 shows a parts feeding apparatus 30 using the feed rod 4 of the embodiment shown in Fig. 1 or 6. In addition, the yoke 12 and space 13 found when using the feed rod of the embodiment shown in Fig. 6 are omitted from illustration. The feed rod 4 is received in an outer sleeve 16, and the piston rod 18 of an air cylinder 17 connected to the outer sleeve 16 is connected to the hollow shaft 7 of the feed rod 4. The hollow shaft 7 is formed with an elongated opening 19 extending in the stroke direction, and a control pin 20 fixed to the inner shaft 8 projects outward through the elongated opening 19. A coil spring 21 is received in the hollow shaft 7 and its tension urges the control pin 20 to abut against the lower end of the elongated opening 19. An air cylinder 22 is fixed to the lower lateral surface of the outer sleeve 16, and its piston rod 23 has a locking element 24 attached thereto, said locking element 24 extending through an elongated opening 25 into the outer sleeve 16, said elongated opening 25 being formed in the outer sleeve 16 and extending in the stroke direction. The relative position between the control pin 20 and the locking element 24 is set such that when the feed rod 4 advances through a predetermined stroke, the control pin 20 comes to a position just short of the locking element 24. A parts feeding pipe 26 is welded to the lower end of the outer sleeve 16. Since the parts to be handled here are bolts 3, such bolt is attracted to and held by the magnet element 6 at the front end of the feed rod 4 in the suspended state shown in Fig. 14. As can be well understood from Fig. 15, the front end of the feed rod 4 is formed with a recess; a stopper element 27 and opposed wall members 28 define a substantially U-shaped frame which is open as at 29 for passage of parts. When the whole of the feed rod 4 is advanced by the output of the air cylinder 17 and stops at a predetermined position, the locking element 24 is pulled upward by the air cylinder 22, whereby the inner shaft 8 alone is retracted, with the magnet element 6 moving away from the head portion 2, thus allowing the bolt 3 to drop from the front end of the feed rod 4.

Fig. 16 shows a modified example in which the magnet element 6 is disposed outside the stopper element 27. A cup-shaped yoke 31 of iron is fitted in a slide element 33. A portion of the slide element extends through an elongated opening 34 formed in the hollow shaft 7 to extend in the stroke direction and abuts against the inner shaft 8. The slide element 33 is integrated with the inner shaft 8 by a bolt 35 driven from the outside. Since the region of the bolt 3 adjacent the right end of its head 2 is attracted for the reason of the principle described with reference to Fig. 4 or 7, there is no magnetic force produced in the front end of the stem portion 1. And when the inner shaft 8 is pulled up, the falling of the bolt 3 is effected in the same manner as in the case of Fig. 13.

The feed rod 4 can be used also in the case where a projection nut 37 having projections 36 for welding is to be fed onto a steel plate 38. The steel plate 38 is mounted on the fixed electrode 39. In this case also, the feed rod shown in Fig. 6 may be used, but in Fig. 17, the space found in the embodiment of Fig. 6 is omitted from illustration.

The feed rod can be applied also to a box wrench shown in Fig. 18. In this case, a head portion 41 is fixed to a rotary shaft 40 and a magnet element 6 is installed on the upper surface side of a quadrangular hole 42 formed in the head portion 41 in the manner shown in Fig. 1 or 6.

The feed rod described above is of the type adapted to hold and transfer a part to an intended place, but a feed rod shown in Fig. 19 is of the type adapted to pull in a bolt 3 entering a hole 10. A fixed electrode 44 for projection welding is mounted on a base block 43 and the iron plate 9 having the hole 10 is mounted on said fixed electrode. The fixed electrode 44 is formed with a guide hole 45, in which a feed rod 4 (which is similar to the inner shaft 8 in the embodiment described above) is inserted for advance and retraction movements. The feed rod 4 is advanced and retracted by the output of an air cylinder 46 disposed under the base block 43. The magnet element 6 contained in the feed rod 4, including the yoke 12 and space 13 concerning the embodiment of Fig. 6, is exactly the same as that shown in Fig. 1 or 6. In addition, the movable electrode 47 is disposed coaxially with the fixed electrode 44. Since the magnetic flux is concentrated in the front end of the stem portion 1 of the bolt 3, there is no phenomenon in which the stem portion 1 is magnetically attracted to the iron plate 9 when the stem portion 1 passes through the hole 10, so that smooth pull-in is possible.

Thus, in the case where the part itself is made of iron and the destination member is also made of iron, with attention paid to the relation between the mode of passage of magnetic lines of force extending from the magnet element to the yoke and the part, there is no attractive magnetic force on the front end of the part, as described with reference to Fig. 4 or 7; therefore, the part is enabled to accurately arrive at the mating member of iron; thus, extremely accurate feeding of parts can be achieved.

An embodiment of the electromagnetic type will now be described.

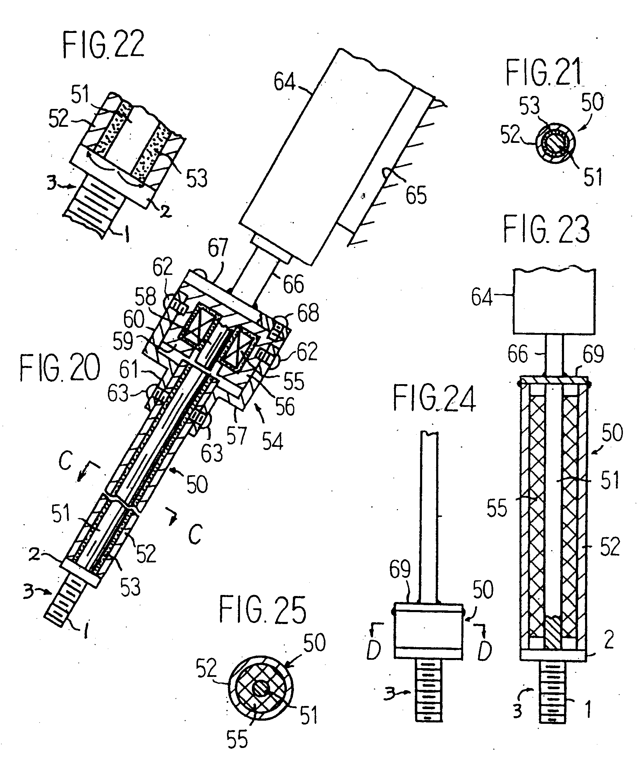

Referring to an embodiment shown in Fig. 20 wherein a magnetic body for parts attraction is mounted on the front end of a feed rod, the feed rod 50 comprises an inner shaft 51 and an outer pipe 52 receiving the same. The two are made of a magnetic material, such as iron, and to keep a fixed distance therebetween, a nonmagnetic material, such as a plastic material 53, is filled therebetween. The cross-section of the feed rod 50 is circular, as shown in Fig. 21. In order that the inner shaft 51 may serve as the N-pole and the outer pipe 52 as the S-pole, an exciting section 54 is connected to the feed rod 50. It comprises an annular exciting coil 55, an iron core 56 housing the same, and a joint pipe 57 for integration with the feed rod 50. The iron core 56 integrally has an N-pole iron core 58 extending through the exciting coil 55 and an S-pole iron core 59 in the form of a cup receiving the exciting coil 55, as shown. At the upper end of the feed rod 50, the inner shaft 51 is opposed to the N-pole iron core 58 while the outer pipe 52 is opposed to the S-pole iron core 59. In the illustrated case, there are slight clearances in such opposed regions, but such clearances may be made zero. The joint pipe 57 comprises a large diameter portion 60 for receiving the iron core 56 and a small diameter portion 61 for receiving the feed rod 50, and the integral arrangement is realized by fixing bolts 62 and 63.

The air cylinder 64 is firmly fixed to a stationary member 65 and its piston rod 66 is welded to a flange 67, which is fixed to the iron core 56 by using fixing bolts 68. In addition, the exciting coil 55 is adapted to be advanced and retracted by the output of the air cylinder 64, but the electric wire in the form of an extensible coil which allows such movement is omitted from illustration. This is the same with all feed rods of the electromagnetic type. Further, it is necessary that the piston rod 66, flange 67, joint pipe 57, and fixing bolts 62, 63, 68 be made of stainless steel or the like which is a nonmagnetic material to prevent the flow of magnetic flux from being disturbed.

The operation will now be described. When the exciting coil 55 is energized, the polarities produced in the iron core 56 are transmitted directly to the inner shaft 51 and outer pipe 52, and in the bolt 3 attracted to the front end of the feed rod 50, magnetic lines of force 22 shown in Fig. 22 are produced. That is, the magnetic lines of force extending from the inner shaft 51 which is the N-pole to the outer pipe 52 which is the S-pole pass through the head portion 2 which is a magnetic body along the shortest path as shown by arrows and hence there is no magnetic line of force produced in the stem portion 1; therefore, there is no magnetic force produced in the front end thereof.

In a modified example shown in Fig. 23, the exciting coil 55 is received in the feed rod 50, with the clearance between the inner shaft 51 and the outer pipe 52 being made slightly larger for receiving the exciting coil 55. The cross-section of the feed rod 50 is circular, as shown in Fig. 25. A yoke 69 of magnetic material is welded to the upper end of the feed rod 50 and a piston rod 66 is welded to said yoke. The function to be performed in this case is the same as that described with reference to Fig. 22.

Fig. 25 shows a modified example in which the feed rod of Fig. 23 is greatly decreased in size.

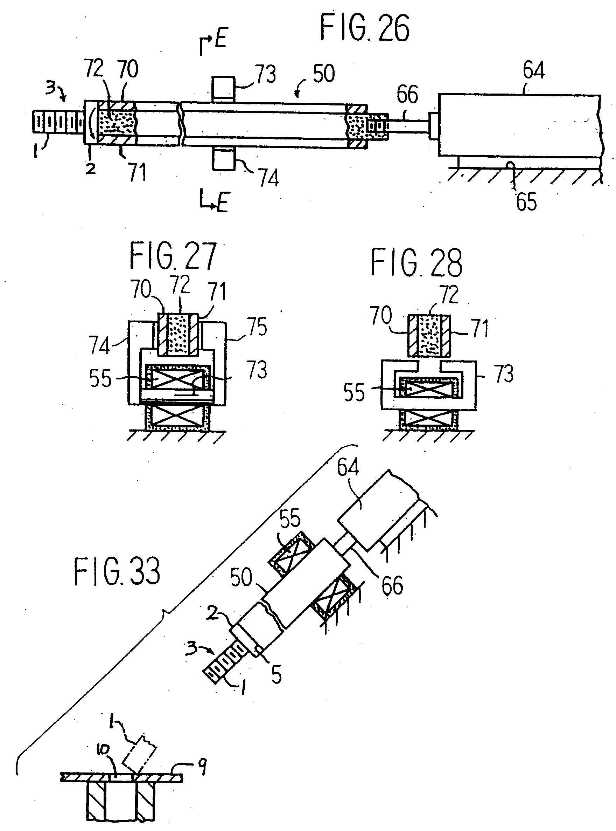

Referring to a modified example shown in Fig. 26, the feed rod 50 comprises two long and narrow iron plates 70 and 71 opposed parallel to each other, and an intermediate member 72 of nonmagnetic material is disposed therebetween to integrate the two iron plate. In the illustrated case, the intermediate member 72 is made of plastic material and the two iron plates 70 and 71 are bonded to the intermediate member 72. As is clear from Fig. 27, yokes 74 and 75 are connected to the iron core 73 extending through the exciting coil 55, and iron plates 70 and 71 are opposed to said yokes with a slight clearance held therebetween. With the arrangement thus made, one iron plate 70 or 71 becomes an N-pole while the other iron plate 71 or 70 becomes an S-pole; thus, magnetic lines of force extending along the shortest path are produced in the head portion 2 of the bolt 3, as shown by arrow in Fig. 26, with no magnetic force produced in the front end of the stem portion 1. In addition, the feed rod 50 can also be used in the case where, as shown in Fig. 26, a part is horizontally delivered to be inserted into a hole (not shown).

As shown in Fig. 28, iron plates 70 and 71 can be polarized by an iron core 73 alone without using a yoke. The iron core 73 is of squarish C-shape. In addition, in both Figs. 27 and 28 the exciting coil 55 is shown fixed to a stationary member, but it may be designed to be advanced and retracted along with the feed rod 50.

In the case where the part itself is made of iron and the recipient member is also made of iron, the attractive force is provided by the exciting coil while attention is paid to the relation between the mode of passage of magnetic lines of force extending from the magnetic body of N-pole at the front end of the feed rod to the magnetic body of S-pole and the part; thus, as described with reference to Figs. 22 and 26, there is no attractive magnetic force in the front end of the part, so that the part accurately arrives at the mating member of iron. In this manner, very accurate feeding of parts is achieved.

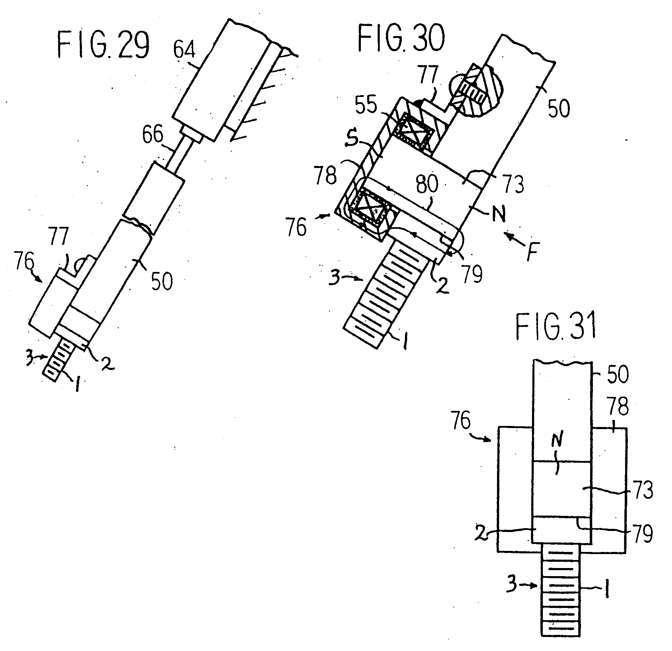

A description will now be given of an embodiment shown in Figs. 29 through 31 wherein an iron core to be magnetized by an exciting coil is disposed at the front end of a feed rod. The feed rod 50 is connected to the piston rod 66 of an air cylinder 64 for advance and retraction movements. An electromagnet unit 76 is fixed to the front end of the feed rod 50 through a bracket 77. The electromagnet unit 76 comprises an exciting coil 55, an iron core 73 extending through said exciting coil 55, and a yoke 78 in the form of a case surrounding said exciting coil 55. The polarities of the iron core 73 are as shown in Fig. 30 wherein N- and S-poles appear at its opposite ends, and the outer surface 79 other than the pole surfaces is opposed to the head portion 2 of a bolt 3. To ensure intimate contact with the upper surface of the head portion 2, the iron core 73 is formed with a quadrangular cross section, as is clear from Figs. 30 and 31, the outer surface 79 being flat. To obtain required magnetic lines of force, the members disposed adjacent the electromagnet unit 76, i.e., the feed rod 50 and bracket 77 should suitably be made of stainless steel, which is a nonmagnetic material.

The operation will now be described. With the exciting coil 55 energized, a bolt 3 is fed from a bolt feed passage (not shown), and when the bolt portion 2 contacts the outer surface 79 and yoke 78, magnetic lines of force extend from the N-pole to the S-pole through the head portion 2 and yoke 78 (Fig. 30). The reference numeral 80 denotes a flow of magnetic flux. Therefore, the attractive force on the bolt 3 is provided by such magnetic lines of force, while there is no magnetic line of force in the stem portion 1. In this state, the feed rod 50 is advanced until the stem portion 1 comes immediately short of or slightly into the hole 10 as shown in Fig. 33, whereupon the feed rod 50 is stopped and substantially at the same time as this stoppage, the exciting coil 55 is deenergized to remove the attractive force on the head portion 2, so that the bolt 3 falls into the hole 10.

In addition, the electric wire for the exciting coil 55 is not shown, but an extensible one in the form of a coil, for example, may be used. Further, in the case where the feed rod 50 is applied to horizontal or upward feeding of parts, the invention can also be effectively embodied.

Thus, since the opposed disposition between the iron core excited by the exciting coil and the part is realized by the outer surface other than the N- and S-pole surfaces, the magnetic lines of force from the N-pole to the S-pole pass concentratedly through the portion of the part adjacent the outer surface of the iron core and hence there is no magnetic line of force passing the front end of the part and its vicinity, so that there is no magnetic force produced in such region. Such phenomenon completely avoids the abnormal state in the prior art example in which the part is attracted to the mating part.

## Claims

1. A parts feeding rod of the magnet type in which a magnet for attracting a part is disposed at the front end of a feed rod, characterized in that the part is opposed to the outer surface of the magnet element other than the N-and S-pole surfaces thereof.

2. A parts feeding rod of the magnet type in which a magnet for attracting a part is disposed at the front end of a feed rod, characterized in that the N- and S-poles of the magnet element are disposed axially of the feed rod, and a yoke of nonmagnetic material is attached to the feed rod axially of the feed rod with a space defined between the yoke and the magnet.

3. A parts feeding rod of the electromagnetic type in which a part is attracted to the front end of the feed rod by a magnetic force produced by an exciting coil, characterized in that a magnetic body of N-pole and a magnetic body of S-pole are disposed at the front end of the feed rod.

4. A parts feeding rod of the electromagnetic type in which a part is attracted to the front end of the feed rod by a magnetic force produced by an exciting coil, characterized in that an iron core to be excited by the exciting coil is disposed at the front end of the feed rod, and its outer surface other than its N- and S-poles is opposed to the part.

EP 0 478 782 A1

FIG.1

FIG. 4

FIG.32

FIG. 5

FIG.2

FIG.16

FIG.13

FIG.3

FIG.15

FIG.17

FIG.18

FIG.14

8

FIG. 6

FIG. 7

FIG. 8

FIG. 9

FIG. 10

FIG. 11

FIG. 12

FIG.19

FIG.22

FIG.21

FIG.20

FIG.23

FIG.24

FIG.25

# FIG. 26

# FIG. 27

# FIG. 28

# FIG. 33

FIG.29

FIG.30

FIG.31

# INTERNATIONAL SEARCH REPORT

International Application No PCT/JP91/00279

## I. CLASSIFICATION OF SUBJECT MATTER (if several classification symbols apply, indicate all) [6]

According to International Patent Classification (IPC) or to both National Classification and IPC

Int. Cl$^5$  B23P19/06

## II. FIELDS SEARCHED

| Minimum Documentation Searched [7] | |
|---|---|
| Classification System | Classification Symbols |
| IPC | B23P19/06, B23P19/04, B25B23/12 |

Documentation Searched other than Minimum Documentation
to the Extent that such Documents are Included in the Fields Searched [8]

| | |
|---|---|
| Jitsuyo Shinan Koho | 1933 – 1991 |
| Kokai Jitsuyo Shinan Koho | 1972 – 1991 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, A, 50-66899 (Toyo Giken K.K.), June 5, 1975 (05. 06. 75), (Family: none) | 1-4 |
| Y | JP, Y2, 62-848 (Toyota Motor Corp.), January 9, 1987 (09. 01. 87), (Family: none) | 1-4 |
| A | JP, U, 58-47475 (Toyota Motor Corp.), March 30, 1983 (30. 03. 83), (Family: none) | 1-4 |
| A | JP, U, 51-3998 (Noboru Nakamura), January 13, 1976 (13. 01. 76), Fig. 2 (Family: none) | 1-4 |
| A | JP, U, 63-60573 (Mitsubishi Metal Corp.), April 22, 1988 (22. 04. 88), (Family: none) | 1-4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| May 13, 1991 (13. 05. 91) | May 27, 1991 (27. 05. 91) |
| International Searching Authority | Signature of Authorized Officer |
| Japanese Patent Office | |

Form PCT/ISA/210 (second sheet) (January 1985)